# EUROPÄISCHE PATENTSCHRIFT

(11) **EP 0 345 463 B1**
(45) Veröffentlichungstag und Bekanntmachung des Hinweises auf die Patenterteilung: **31.08.1994**
(21) Anmeldenummer: 89108004.6
(22) Anmeldetag: 03.05.1989
(51) Int. Cl.: C08J 5/04

(54) **Verfahren zur kontinuierlichen Herstellung von faserverstärkten Thermoplastbahnen, faserverstärkte Thermoplastbahnen sowie ihre Verwendung**
Process for continuously producing fibre-reinforced thermoplastic webs, the fibre-reinforced thermoplastic webs and their use
Procédé pour préparer d'une façon continue des bandes thermoplastiques renforcées par des fibres, le produit obtenu et son application

(30) Priorität: 01.06.1988 AT 1428/88
(43) Veröffentlichungstag der Anmeldung: 13.12.1989
(73) Patentinhaber: PCD-Polymere Gesellschaft m.b.H., A-2323 Schwechat-Mannswörth (AT)
(72) Erfinder: Horacek, Heinz, Dr., A-4020 Linz (AT)
(74) Vertreter: Kunz, Ekkehard, Dr.

(56) Entgegenhaltungen:
- FR-A- 2 570 329
- GB-A- 1 542 153
- GB-A- 2 055 680
- US-A- 4 104 340

## Beschreibung

Die Erfindung betrifft ein kontinuierliches Verfahren zur Herstellung von faserverstärkten, unidirektionale (UD-)-Endlosfäden enthaltenden Thermoplastbahnen, faserverstärkte Thermoplastbahnen, die mit Hilfe dieses Verfahrens hergestellt werden sowie die Verwendung dieser faserverstärkten Thermoplastbahnen.

Faserverstärkte Thermoplastbahnen bzw. Thermoplastplatten sind hochwertige Konstruktionswerkstoffe, die üblicherweise in weiterer Folge in einem Heißpreßvorgang in beheizten Formpressen unter Druck zu den gewünschten Formteilen fertiggepreßt werden. Sie werden hauptsächlich im Maschinen- und Apparatebau, in der Auto- und Flugzeugindustrie sowie für Sport- und Haushaltsgeräte verwendet. Besonders hohe mechanische Eigenschaftswerte können beim Einsatz von UD-Endlosfäden oder UD-Rovings als Faserverstärkung erreicht werden.

Ein besonderes Problem bei der Herstellung derartiger Verbundwerkstoffe ist die gute Tränkung und Benetzung der Faserverstärkung mit dem Thermoplasten, die zur Erzielung von guten mechanischen Eigenschaften wesentlich ist. Besonders schwierig wird eine gute Benetzung bei Verwendung von UD-Endlosfäden erreicht, insbesondere dann, wenn diese gebündelt als Rovings vorliegen. In der EP-B1-0056703 wird diese Schwierigkeit dadurch überwunden, daß zur Erreichung einer guten Benetzung und damit auch guter mechanischer Eigenschaften, als Thermoplaste Hochleistungspolymere mit sehr niedriger Schmelzviskosität verwendet werden. Dabei werden die parallel ausgerichteten Verstärkungsfäden in einem Schmelzpultrusionsverfahren über eine Spreizvorrichtung durch die Schmelze des Thermoplasten gezogen, wobei die Schmelze in einem separaten Verfahrensschritt zuerst aus dem Thermoplastpulver über externe Heizelemente oder Extruder erschmolzen wird. In der DE-OS 3724155 wird eine gute Benetzung durch die Verwendung eines Polypropylens mit bimodaler Molekulargewichtsverteilung erreicht, wobei sowohl höhermolekulare als auch niedermolekulare Polypropylene verwendet werden. Außerdem ist es möglich, eine niedrige Viskosität und damit eine gute Benetzung der Verstärkungsfäden durch Lösen oder Dispergieren des Thermoplasten in einem Lösungs- oder Dispergiermittel (US-PS 4058581, WO 86/03449) bzw. durch Zusatz von die Viskosität erniedrigenden Fremdpolymeren (US-PS 4438236) zu erreichen.

Der Nachteil dieser Verfahren, die vor allem eine niedrige Viskosität des Thermoplasten erfordern, liegt vor allem in der Beschränkung bei der Auswahl des Thermoplasten, da zur Erzielung einer ausreichenden Benetzung eben nur solche mit geringer Viskosität, bzw. nur spezielle Thermoplastmischungen verwendet werden können, bzw. in der Verwendung von zusätzlichen Lösungsmitteln, die arbeits- und energieintensiv sowie gesundheits- und umweltbelastend wieder entfernt und aufgearbeitet werden müssen.

Die Aufgabe der vorliegenden Erfindung war es, ein Verfahren zur Herstellung von faserverstärkten Thermoplastbahnen mit guten mechanischen Eigenschaften, die auch in Querrichtung Werte von zumindest etwa 25 % der in Längsrichtung gemessenen Werte erreichen sollten, unter Ausschaltung der Nachteile der bekannten Verfahren zu finden. Insbesondere sollte eine gute Benetzung der Faserverstärkung auch beim Einsatz beliebiger Thermoplaste ohne zusätzliche Verdünnungsmittel möglich sein.

Die Lösung der Aufgabe wurde dadurch gefunden, daß Thermoplast und Faserverstärkung sowohl in Form von UD-Endlosfäden als auch in Form eines Filmes bzw. als Vlies, Gewebe oder Schnittfasern eingesetzt werden.

Gegenstand der Erfindung ist demnach ein Verfahren zur kontinuierlichen Herstellung von faserverstärkten Thermoplastbahnen, das dadurch gekennzeichnet ist, daß UD-Endlosfäden aus Glas, Kohle, Aramid, Keramik oder Metall oder Textilfäden oder Mischungen derselben, UD-Endlosfäden aus einem Thermoplasten, eine Schmelze oder ein Film des Thermoplasten sowie zusätzliche Verstärkungsfasern bei einer Temperatur, die über dem Schmelzpunkt des Thermoplasten liegt und bei Drücken von 1,2 bis 40 bar gemeinsam verpreßt werden.

Als UD-Endlosfäden kommen sowohl Einzelfäden als auch Rovings in Frage. Im Falle von Rovings ist es vorteilhaft, die Fadenbündel vor dem Einlauf in die kontinuierliche Presse in Einzelfäden aufzuspleißen, um eine gleichmäßige Verteilung der Endlosfäden aus den verschiedenen Materialien zu erreichen. Das Aufspleißen der Einzelfäden kann beispielsweise mit Hilfe von Druckluft oder durch Führen der Rovings über eine Spreizvorrichtung erfolgen.

Erfindungsgemäß können alle Thermoplaste, die sich zu Fäden verarbeiten lassen, wie z. B. Polyolefine, Polyamide, Polyester, Polycarbonate, Polyurethane, Polyphenylenoxid, Polyphenylensulfid, Polysulfone, Polyetheretherketone, Polyamidimide und Polyetherimide verwendet werden. Bevorzugte Thermoplaste sind Polypropylen, Polyamide, beispielsweise Polyamid 6 oder Polyamid 6,6 sowie Polyethylenterephthalat. Als besonders günstig erweist sich Polypropylen, worunter sowohl Homopolymere als auch Copolymere beispielsweise mit Ethylen oder ungesättigten Carbonsäuren zu verstehen sind. Die zusx.

Die zusätzlich mitverpreßten Verstärkungsfasern bestehen aus Glas-, Kohle-, Aramid-, Keramik-, Metall- oder Textilfasern oder Mischungen derselben. Sie können beispielsweise in Form von Fasermatten, z. B. als genadelte oder gesteppte Wirrvliesbahn, als Gewebe oder als Schnittfasern vorliegen. Unter Textilfasern und -fäden sind sowohl Naturfasern, wie z. B. Jute, als auch Synthesefasern mit einem höheren Schmelzpunkt bzw. Zersetzungspunkt als jener der Thermoplastmatrix zu verstehen. Die zusätzlichen Verstärkungsfasern werden bevorzugt in einer Menge von 20 - 70 Gew.% eingesetzt, bezogen auf die Gesamtmenge an Glas-, Kohle-, Aramid-, Keramik-, Metall-, Textilfäden und zusätzlichen Verstärkungsfasern.

Es erweist sich als vorteilhaft, wenn UD-Endlosfäden und zusätzliche Verstärkungsfasern aus Glas, Kohle, Aramid oder deren Mischungen im Verbund enthalten sind. Der fertige Verbund besitzt üblicherweise einen Gehalt an Verstärkungsfasern von insgesamt etwa 15 - 60 Vol %. Dies entspricht im Falle von Glasfasern einem Gehalt von etwa 20 - 75 Gew.%.

Die Herstellung der faserverstärkten Thermoplastbahnen erfolgt auf einer kontinuierlichen Presse, beispielsweise einer Doppelbandpresse, der die gleichmäßig über die Breite verteilten thermoplastischen UD-Endlosfäden, die UD-Endlosfäden aus Glas, Kohle, Aramid, Keramik oder Metall oder Textilfäden oder Mischungen derselben, eine Thermoplastschmelze, beispielsweise ein frisch extrudierter Schmelzefilm oder eine Thermoplastfolie, sowie zusätzliche Verstärkungsfasern, beispielsweise in Form einer Wirrvliesmatte kontinuierlich zugeführt werden. Im ersten, beheizten Teil der Doppelbandpresse schmilzt der zugeführte Thermoplast bei Temperaturen, die üblicherweise 20 bis 80°C über seinem Schmelzpunkt liegen, vollständig auf, wobei die UD-Endlosfäden aus Glas, Kohle, Aramid, Keramik oder Metall oder Textilfäden sowie die zusätzliche Faserverstärkung zwischen den Bändern der Presse unter Druck mit dem geschmolzenen Thermoplasten imprägniert werden. In einer anschließenden Kühlzone wird der gebildete Verbund, ebenfalls zwischen den Bändern der Presse, unter Druck abgekühlt und dadurch verfestigt. Die erhaltenen faserverstärkten Thermoplastbahnen haben üblicherweise eine Dicke von 1 bis 10 mm.

Ein weiterer Gegenstand der Erfindung sind faserverstärkte Thermoplastbahnen, die gemäß dem oben beschriebenen Verfahren hergestellt werden. Die faserverstärkten Thermoplastbahnen werden vor allem als Ausgangsmaterial zur Herstellung von Formteilen durch Heißpressen verwendet. Die etwa 20 bis 80°C über den Schmelzpunkt des Thermoplasten erwärmten Bahnen oder Platten werden dabei in beheizte Formen eingelegt und bei Temperaturen von etwa 70 bis 120°C und Drücken von 1 bis 100 bar verpreßt.

### Vergleichsbeispiel V1

Ein Polypropylen (PP)-Homopolymer mit einem MFI von 200 g/10 min (gemessen gemäß ISO R 1133, Procedure 12, 230°C, 2,16 kg), 0,6 Gew.% Langzeitstabilisator (Irganox 1010, Ciba-Geigy), 0,2 Gew.% Verarbeitungsstabilisator (Irgaphos PEPQ, Ciba-Geigy) und 2 Gew.% Ruß (Euthylenschwarz BASF) wurden in einem Extruder aufgeschmolzen, als 1,3 m breiter Film mit einem Flächengewicht von 2,7 kg/m² aus einer Breitschlitzdüse extrudiert und einer Doppelbandpresse mit 4 m/min Geschwindigkeit zugeführt. Gleichzeitig wurden der Doppelbandpresse oberhalb des Schmelzefilmes 375 E-Glasrovings pro Meter (2400 tex, 0,014 mm Durchmesser, Type EC 14 -2400 - P 365 (300), Gevetex), sowie oben und unten je eine Glasfaser-Wirrvliesmatte mit einem Flächengewicht von 450 g/m²(Type U 101, Gevetex) zugeführt. Bei einer Temperatur von 200°C und einem Druck von 5 bar wurde eine 3,7 mm dicke, 1,3 m breite, glasfaserverstärkte PP-Bahn mit einem Glasgehalt von 40 Gew.%, einem PP-Gehalt von 60 Gew.% und einem Flächengewicht von 4,5 kg/m² erhalten. Biegemodul (DIN 53457), Biegefestigkeit (DIN 53453) und Schlagzähigkeit des Verbundes nach dem Formpressen bei 70°C Formtemperatur und 100 bar sind in Tabelle 1 zusammengestellt.

### Beispiel 2

Analog zu Beispiel V1 wurde eine glasfaserverstärkte PP-Bahn mit einem PP-Gehalt von ebenfalls 60 Gew.% hergestellt, wobei jedoch 50 Gew.% PP als Schmelzefilm wie in Beispiel 1, jedoch aus einem PP mit einem MFI von 50 g/10 min (Daplen^{(R)} US 105A von Petrochemie Danubia) mit einem Flächengewicht von 2,25 kg/m² und 10 Gew.% PP in Form von 62 PP-Rovings pro Meter mit je 7 300 tex (Asota^{(R)} Einzelfadentiter 17 dtex), die gemeinsam mit den Glasfaserrovings der Presse zugeführt wurden, eingesetzt wurden. Die Eigenschaften des 3,7 mm dicken Verbundes sind in Tabelle 1 zusammengestellt.

### Beispiele 3 - 6

Analog zu Beispiel 2 wurden glasfaserverstärkte PP-Bahnen mit 60 Gew.% PP hergestellt, wobei jedoch der Anteil PP, der als Schmelzefilm und der Anteil PP, der in Form von PP-Rovings eingesetzt wurde, gemäß den in Tabelle 1 angeführten Mengen variiert wurde. In Vergleichs-Beispiel 6 wurden die gesamten 60 Gew.% PP in Form von 370 PP-Rovings pro m (zu je 7300 tex) eingesetzt. Die Eigenschaften der 3,7 mm dicken Verbunde sind in Tabelle 1 zusammengestellt.

### Beispiel V7:

Analog zu Beispiel V1 wurde eine faserverstärkte PP-Bahn hergestellt, mit dem Unterschied, daß aus Daplen^{(R)}US 105A (MFI = 50 g/10 min) ein Schmelzefilm mit einem Flächengewicht von 2,59 kg/m² hergestellt wurde, und daß als Faserverstärkung zwei Glasfaser-Wirrvliesmatten (U 101) mit einem Flächengewicht von je 200 g/m² sowie 925 Kohlefaserrovings pro 1 m (800 tex, HTA-7-12000, Toho Rayon) eingesetzt wurden. Es wurde eine faserverstärkte PP-Bahn mit 10 Gew.% Glasfasern, 20 Gew.% Kohlefasern und 70 Gew.% PP erhalten, deren mechanische Eigenschaften in Tabelle 2 zusammengestellt sind.

### Beispiel 8:

Analog zu Beispiel V7 wurde eine mit Kohle- und Glasfasern verstärkte PP-Bahn mit einem PP-Gehalt von ebenfalls 70 Gew.% hergestellt, wobei jedoch 40 Gew.% PP in Form eines Schmelzefilmes mit einem Flächengewicht von 1,5 kg/m² und 30 Gew.% PP in Form von 152 PP-Rovings pro m (7300 tex, 17 dtex Einzelfadentiter) eingesetzt wurden. Die Eigenschaften sind in Tabelle 2 zusammengestellt.

### Beispiel V9:

Analog zu Beispiel V1 wurde eine faserverstärkte PP-Bahn hergestellt, mit dem Unterschied, daß aus Daplen^{(R)} US 105A (MFI = 50 g/10 min) ein Schmelzefilm mit einem Flächengewicht von 2,45 kg/m² hergestellt wurde, und daß als Faserverstärkung zwei Glasfaser-Wirrvliesmatten (U 101) mit einem Flächengewicht von je 175 g/m² sowie 3000 Stränge pro m aus Aramid-Endlosfasern (Kevlar^{(R)} 49, 235 tex, Du Pont) eingesetzt wurden. Es wurde eine faserverstärkte PP-Bahn mit 10 Gew.% Glasfasern, 20 Gew.% Aramidfasern und 70 Gew.% PP erhalten, deren Eigenschaften in Tabelle 3 zuammengestellt sind.

### Beispiel 10:

Analog zu Beispiel V9 wurde eine mit Aramid- und Glasfasern verstärkte PP-Bahn mit einem PP-Gehalt von ebenfalls 70 Gew.% hergestellt, wobei jedoch nur 40 Gew.% PP in Form eines Schmelzefilms (1,4 kg/m²) und 30 Gew.% PP in Form von 145 PP-Strängen pro m (7300 tex) eingesetzt wurden. Die Eigenschaften sind in Tabelle 3 zusammengestellt.

Aus den Beispielen wird ersichtlich, daß bei zusätzlicher Verwendung von PP-Rovings die mechanischen Eigenschaften der Verbunde verbessert wurden.

**Tabelle 1**

| Glasfaserverstärkte PP-Bahnen (60 Gew.% PP, 20 Gew.% Glasmatte, 20 Gew.% Glasrovings) | | | | | |
|---|---|---|---|---|---|
| | PP-Schmelze (Gew.%) MFI = 50 | PP-Roving (Gew.%) MFI = 15 | Biege-E-Modul (N/mm²) längs/quer | Biegefes tigkeit (N/mm²) längs/quer | Schlagzähigkeit (kJ/m²) längs/quer |
| V1 | 60* | 0 | 6000/5000 | 130/50 | 140/40 |
| 2 | 50 | 10 | 8500/6000 | 150/90 | ohne Bruch |
| 3 | 40 | 20 | 9000/5500 | 150/90 | ohne Bruch |
| 4 | 30 | 30 | 10000/6000 | 145/90 | ohne Bruch |
| 5 | 10 | 50 | 8500/6000 | 130/80 | ohne Bruch |
| 6' | 0 | 60 | 8500/6000 | 180/90 | 230/60 |
| 6' = Vergleichsbeispiel | | | | | |

| | | | | | |
|---|---|---|---|---|---|
| *MFI = 200 g/10 min | | | | | |

**Tabelle 2**

| Kohlenstoffaserverstärkte PP-Bahnen (70 Gew.% PP, 10 Gew.% Glasmatte, 20 Gew.% C-Rovings) | | | | | |
|---|---|---|---|---|---|
| V7 | 70 | 0 | 12000/3200 | 200/50 | 150/30 |
| 8 | 40 | 30 | 14000/3400 | 220/80 | 160/40 |

**Tabelle 3**

| Aramidfaserverstärkte PP-Bahnen (70 Gew.% PP, 10 Gew.% Glasmatte, 20 Gew.% Aramidfaserrovings) | | | | | |
|---|---|---|---|---|---|
| V9 | 70 | 0 | 9000/2800 | 150/50 | 120/50 |
| 10 | 40 | 30 | 12000/3500 | 170/70 | 140/60 |

## Patentansprüche

1. Verfahren zur kontinuierlichen Herstellung von faserverstärkten Thermoplastbahnen, dadurch gekennzeichnet, daß unidirektionale Endlosfäden aus Glas, Kohle, Aramid, Keramik oder Metall oder Textilfäden oder Mischungen derselben, unidirektionale Endlosfäden aus einem Thermoplasten, eine Schmelze oder ein Film des Thermoplasten sowie zusätzliche Verstärkungsfasern bei einer Temperatur, die über dem Schmelzpunkt des Thermoplasten liegt und bei Drücken von 1,2 bis 40 bar gemeinsam verpreßt werden.

2. Verfahren gemäß Anspruch 1, dadurch gekennzeichnet, daß unidirektionale Endlosfäden sowie zusätzliche Verstärkungsfasern aus Glas, Kohle oder Aramid oder Mischungen derselben eingesetzt werden.

3. Verfahren gemäß Anspruch 1 oder 2, dadurch gekennzeichent, daß als Thermoplast Polypropylen oder Polyamid eingesetzt wird.

4. Verfahren gemäß Anspruch 3, dadurch gekennzeichnet, daß als Thermoplast Polypropylen eingesetzt wird.

5. Verfahren gemäß einem der Ansprüche 1 bis 4, dadurch gekennzeichnet, daß 20 bis 70 Gew.% des Thermoplasten in Form von unidirektionalen Endlosfäden eingesetzt werden.

6. Verfahren gemäß einem der Ansprüche 1 bis 5, dadurch gekennzeichnet, daß zusätzliche Verstärkungsfasern in einer Menge von 20 - 70 Gew.%, bezogen auf die Gesamtmenge an Glas, Kohle, Aramid, Keramik oder Metall oder Textilfäden und zusätzlichen Verstärkungsfasern, eingesetzt werden.

7. Faserverstärkte Thermoplastbahnen, die nach dem Verfahren gemäß Anspruch 1 durch gemeinsames kontinuierliches Verpressen von unidirektionalen Endlosfäden aus Glas, Kohle, Aramid, Keramik oder Metall oder Textilfäden oder Mischungen derselben, unidirektionalen Endlosfäden aus einem Thermoplasten, einer Schmelze oder einem Film des Thermoplasten sowie zusätzlichen Verstärkungsfasern bei einer Temperatur, die über dem Schmelzpunkt des Thermoplasten liegt und bei Drücken von 1,2 bis 40 bar, erhalten werden.

8. Verwendung von faserverstärkten Thermoplastbahnen gemäß Anspruch 7 als Ausgangsmaterial zur Herstellung von Formteilen durch Heißpressen.

## Claims

1. A method for the continuous production of reinforced thermoplastic webs characterized in that unidirectional filaments of glass, carbon, aramide, ceramic or metal or textile fibers or mixtures thereof, unidirectional filaments of a thermoplastic, a molten mass or a film of the thermoplastic as well as additional reinforcing fibers are pressed together at a temperature above the melting point of the thermoplastic and at pressures of 1.2 to 40 bar.

2. A method as claimed in Claim 1 characterized in that unidirectional filaments and additional reinforcing fibers of glass, carbon or aramide fibers or mixtures thereof are used.

3. A method as claimed in any of claims 1 or 2 characterized in that polypropylene or polyamide is used as a thermoplastic.

4. A method as claimed in Claim 3 characterized in that polypropylene is used as a thermoplastic.

5. A method as claimed in any of claims 1 to 4 characterized in that 20 to 70 weight % of the thermoplastic is used in the form of unidirectional filaments.

6. A method as claimed in any of claims 1 to 5 characterized in that additional reinforcement fibers in an amount of 20 to 70 weight % in relation to the entire amount of glass, carbon, aramide, ceramic or metal or textile fibers and additional reinforcing fibers are used.

7. Reinforced thermoplastic webs which are obtained as claimed in Claim 1 through the continuous pressing together of unidirectional filaments of glass, carbon, aramide, ceramic or metal or textile fibers or mixtures thereof, unidirectional filaments of a thermoplastic, a molten mass or a film of thermoplastic as well as additional reinforcing fibers at a temperature above the melting point of the thermoplastic and at pressures of 1.2 to 40 bar.

8. An application of-reinforced thermoplastic webs as claimed in Claim 7 as the basic material in the production of preforms by means of hot-pressing.

## Revendications

1. Procédé de fabrication continue de bandes thermoplastiques renforcées par fibres,
**caractérisé en ce que**
les fils continus unidirectionnels de verre, charbon, aramide, céramique ou métal ou les fibres textiles ou leurs mélanges, les fils continus unidirectionnels provenant d'un thermoplastique, une fonte ou un film thermoplastique ainsi que des fibres de renforcement supplémentaires sont comprimés ensemble à une température supérieure au point de fusion du thermoplastique et à des pressions de 1,2 à 40 bar.

2. Procédé conformément à la revendication 1,
**caractérisé en ce que**
l'on utilise des fils continus unidirectionnels ainsi que des fibres de renforcement supplémentaires en verre; charbon ou aramide ou leurs mélanges.

3. Procédé conformément à la revendication 1 ou 2,
**caractérisé en ce que**
l'on utilise comme thermoplastique du polypropylène ou du polyamide.

4. Procédé conformément à la revendication 3,
**caractérisé en ce que**
l'on utilise comme thermoplastique du polypropylène.

5. Procédé conformément à l'une des revendications 1 à 4,
**caractérisé en ce que**
l'on utilise 20 à 70 % en poids du thermoplastique sous forme de fils continus unidirectionnels.

6. Procédé conformément à l'une des revendications 1 à 5,
**caractérisé en ce que**
l'on utilise des fibres de renforcement supplémentaires à raison d'une quantité de 20 à 70 % en poids, par rapport à la quantité totale de verre, charbon, aramide, céramique ou métal ou fils textiles et fibres de renforcement supplémentaires.

7. Bandes thermoplastiques renforcées par fibres obtenues, selon le procédé conformément à la revendication 1, par compression commune continue de fils continus unidirectionnels de verre, charbon, aramide, céramique ou métal, ou de fils textiles ou leurs mélanges, de fils continus unidirectionnels provenant d'un thermoplastique, d'une fonte ou d'un film thermoplastique ainsi que de fibres de renforcement supplémentaires à une température supérieure au point de fusion du thermoplastique et à des pressions de 1,2 à 40 bar.

8. Utilisation de bandes thermoplastiques renforcées par fibres conformément à la revendication 7 comme matériau de base pour la fabrication de pièces usinées par moulage à chaud.
